# EUROPEAN PATENT APPLICATION

(11) **EP 2 246 220 A1**
(43) Date of publication of application: **03.11.2010**
(21) Application number: 10159013.1
(22) Date of filing: 01.04.2010
(51) Int. Cl.: B60R 13/10, G09F 3/10

(54) **Support, kit and method for permanent customization of windows**

(30) Priority: 08.04.2009 IT MI20090566
(71) Applicant: Happy Group System S.r.l., 25047 Darfo Boario Terme (BS) (IT)
(72) Inventor: Luca, Dossena, 25047, Gorzone (BS) (IT); Alfiero, Scarsi, 25040, Cividate Camuno (BS) (IT)
(74) Representative: Bonvicini, Davide

(57) **Abstract**

A support (1) for permanent customization of windows comprises an adhesive label (2) having a first side with adhesive ability. The adhesive label (2) has a plurality of through holes (3), which generally identify a string (4) of numbers and/or letters (5). The through holes (3) are in such an arrangement that the numbers and/or letters of the string are normally readable in their current meaning by an observer who looks at the adhesive label (2) from its side with adhesive ability.

## Description

The present invention relates to a support, a kit and a method for permanent customization of windows, particularly but without limitation car windows.

As used in the present invention, the word "window" identifies an article adapted to be used, for instance, as a windscreen, side window, rear window, motorcycle windshield, door window glass and the like. Namely, the word "window" shall be intended without limitation in terms of the material of which the article is made, as the window material may be glass, plastic, a multilayer glass and plastic element, such as a scarified windscreen, and more.

For simplicity, reference will be made hereinafter, without limitation, to car windows.

In the automotive industry, permanent customization of windows has long been performed, by indelible marking thereof with the chassis number, the plate number and/or other characteristic numbers or simples, for permanent and indelible customization of the car. Such permanent customization is used to deter theft. If such customized car is stolen, then the thieves will also have to replace windows having a clear and indelible identification element impressed thereon, that would identify the car as stolen.

Furthermore, such permanent window identification also deters the sale of stolen windows as spare parts.

Typically, such permanent customization of car windows is currently obtained by blasting or similar techniques. In short, a jig is affixed to the window to be permanently customized, such jig having pass-through apertures that define as a whole the numbers/letters to be indelibly applied/written on the window. Then, a blasting step is carried out, which is obviously only effective on the portions of the window surface that coincide with such through apertures defining the numbers and/or letters to be applied to the window.

In spite of the effectiveness of this customization technique, that can provide the desired customization, it should be noted that it still suffers from certain drawbacks.

First, blasting requires the use of special tools, and has to be performed by highly skilled personnel. Furthermore, if sand, or any other abrasive powder in use, is released during blasting, such sand will foul the car or, even worse, may infiltrate window driving mechanisms, thereby causing malfunctioning thereof.

Also, it shall be noted that permanent customization of car windows by blasting has no potential for further highlighting of the customized area, to make it more evident or allow the addition of a logo, a decoration and the like.

The problem addressed by this invention is to provide a support for permanent customization of windows whose structural and functional features obviate the drawbacks as described above with reference to prior art window customization techniques.

This problem is solved by a support for permanent customization of windows as defined by the features of claim 1.

In another aspect, the present invention also relates to a kit as defined in claim 9 and a method as defined in claim 13.

Further features and advantages of the support, the kit and the method for permanent customization of windows according to the present invention will appear from the following description of a few preferred embodiments thereof, which is given by way of illustration and without limitation with reference to the accompanying figures, in which:
- Figure 1 is a simplified perspective view from within the interior of a car, whose windows are permanently customized by the support of the invention;
- Figure 2 is a simplified perspective view of the car of Figure 1, taken from outside its interior;
- Figure 3 is a plane perspective view of a support for permanent customization of windows according to the present invention, with an edge of the adhesive label partially removed from the support sheet;
- Figure 4 is a plane perspective view of a permanent window customization support of the invention according to a second embodiment;
- Figure 5 shows the support of Figure 4, with the adhesive label partially removed from the support sheet;
- Figure 6 is a plane perspective view of a permanent window customization support of the invention according to a third embodiment and
- Figure 7 shows the support of Figure 6, with the adhesive label partially removed from the support sheet.

Referring to the accompanying figures, numeral 1 generally designates a support according to the invention, for permanent customization of elements such as a window C of a car A.

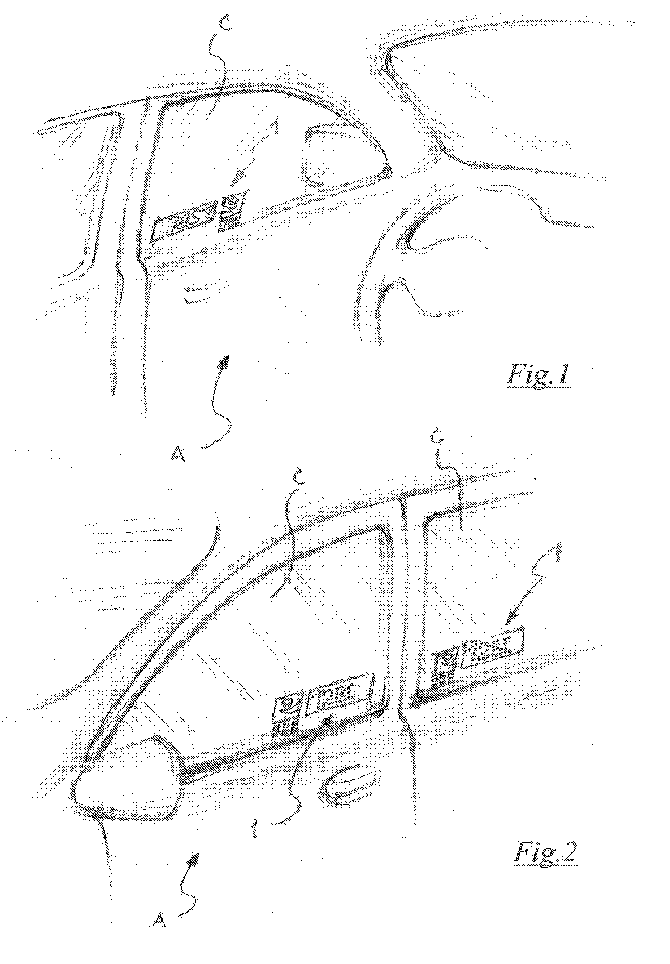

As shown in Figures 1 and 2, the permanent customization support 1 is affixed to the driver-side front window of the car, so that as such window is seen from outside the car, an alphanumeric string is readable thereon, which corresponds to the chassis number and/or the plate number and/or any other element adapted to associate the car with its owner.

As an example, Figures 1 and 2 show an alphanumeric string "1 2 B C", but it will be understood that the actual string will include the characters of the alphanumeric code of the chassis number and/or the plate number of the car.

It shall be noted that the permanent customization support 1 may be placed at the portion of the window surface that is found to be most appropriate. It shall be further noted that the size of the alphanumeric characters in the figures of the present invention has been expressly enlarged for improved intelligibility of the figures. The actual size of the alphanumeric characters may be changed as desired according to particular requirements.

According to the invention, the permanent customization support comprises:
- an adhesive label 2 having a first side with adhesive ability, i.e. an adhesive side and a second non adhesive side opposite thereto and
- a support sheet 8 against which said first adhesive side of the adhesive label 2 is adhered in a reversible manner. Thus, the adhesive label 2 may be removed from the support sheet 8 without being degraded and losing its adhesive ability, and be later adhered to a window.

Advantageously, the adhesive label 2 has a plurality of through apertures 2, which generally identify a string 4 of numbers and/or letters 5.

These through apertures 3 are in such an arrangement and orientation that at least the numbers and/or letters 5 of the alphanumeric string 4 are normally readable in their current meaning by an observer who looks at the adhesive label 2 from its side with adhesive ability.

The term current meaning is intended to indicate the proper way of writing and representing Arab numbers, i.e. "1 2 3 4 5 6 7 8 9 0" whereas the letters are appropriately written and oriented when they are disposed from "A" to "Z" according to the current Latin alphabet.

Referring to the annexed figures, it will be understood that the above mentioned alphanumeric string 4 "1 2 B C" is normally readable in its current meaning in Figure 2, whereas in Figures 1, 3, 4 and 6 it is shown on the contrary, namely horizontally reversed. In Figures 1, 3, 4 and 6, the alphanumeric string 4 should be reflected in a mirror to be normally read in its current meaning.

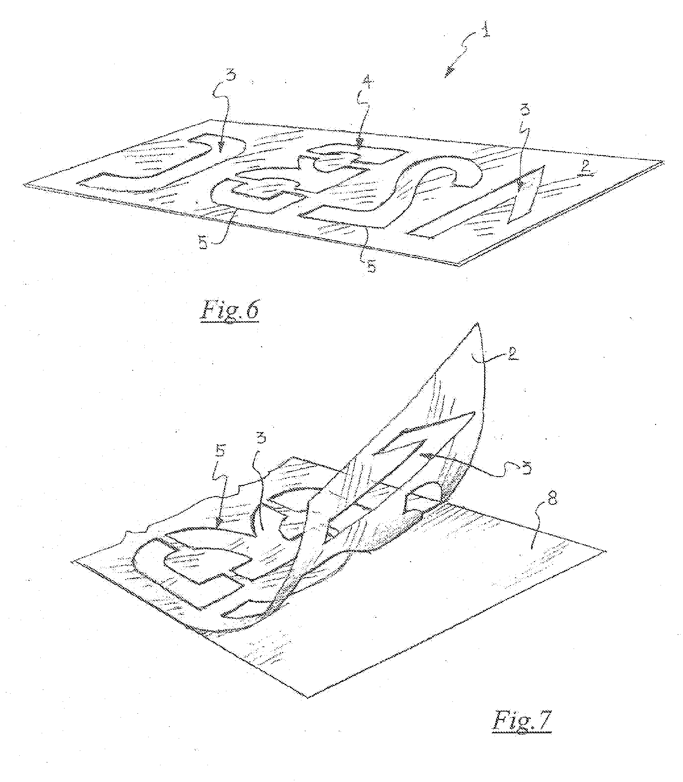

In the embodiment as shown in Figures 6 and 7, the through apertures 3 have been conformed to define the contour of the numbers and/or letters 5 that form the particular alphanumeric string 4 to be applied to the window C. Thus, the adhesive label 2 has a plurality of through aperture 3 that match the through apertures that can be normally found in a lettering guide.

According to a preferred embodiment, these through apertures 3 consist of a plurality of through holes 5, so that each number and/or letter 5 of the alphanumeric string 4 is defined by a plurality of said through holes 3.

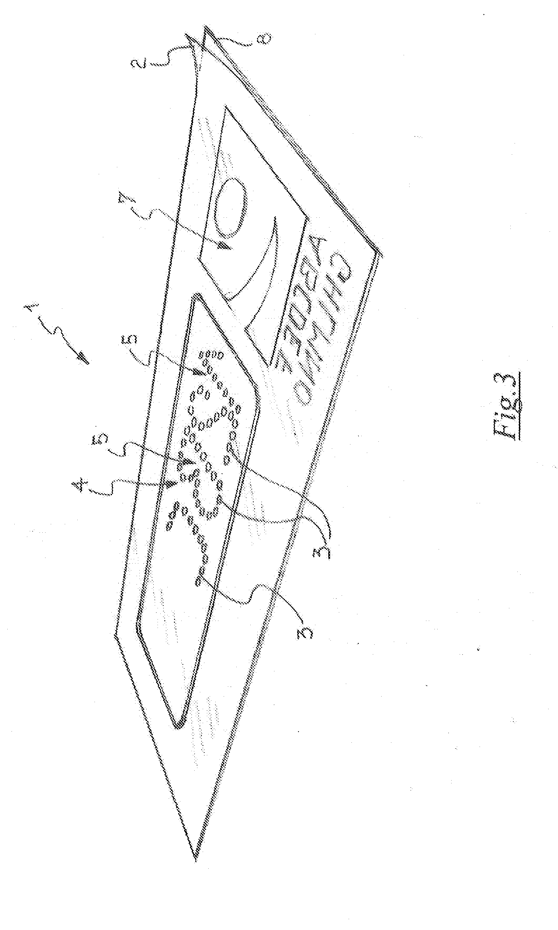

As shown in Figure 3, the through holes 3 are all enclosed in the perimeter defined by the shape of a particular number and/or letter 5, so that each number and/or letter 5 of the alphanumeric string 4 is defined by the union of a plurality of said through holes 3. This particular embodiment is particularly suitable to represent small alphanumeric characters, e.g. 3 or 4 millimeters high.

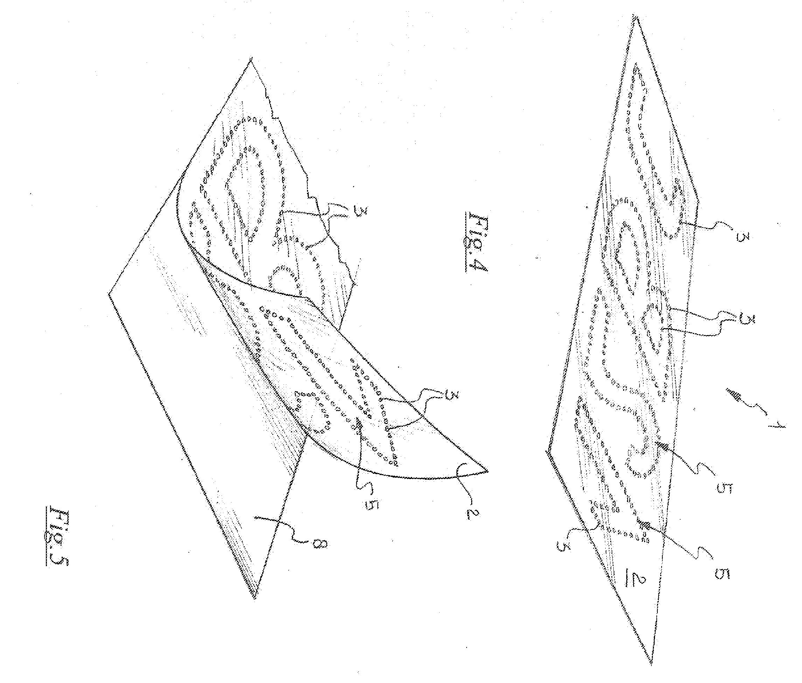

In the exemplary embodiment of Figures 4 and 5, the through holes 3 are arranged one behind the other along the contour of each number and/or letter 5. This embodiment is particularly adapted to represent large numbers and/or letters 5, e.g. of the order of a few centimeters, a further embodiment, not shown, being also possibly provided, in which the through holes 3 are also present within the contour of each number and/or letter 5.

In accordance with a further embodiment, not shown, the numbers and/or letters 5 of the alphanumeric string 4 may be also obtained from a reverse representation, i.e. by forming through holes 3 all over an entire portion of the surface of the adhesive label 2 excepting certain areas, whose contours define the numbers and/or letters 5 that form the alphanumeric string 4.

Preferably the adhesive label 2 carries at least one printed element 7 selected from the group comprising a graphic element, a decoration, a text, a logo and/or a drawing, for customization of said adhesive support with additional commercial and/or other useful information, for complementing the information resulting from the alphanumeric string.

In this case, the adhesive label 2 may be advantageously formed from a transparent adhesive film, with the printed element 7 thereon.

It shall be noted that the provision of the printed element 7 on the very support with the holes that form the numbers and/or letters 5 of the alphanumeric string 4, affords proper positioning and correct parallel arrangement of the graphic element 7 and the alphanumeric string 4, which would be difficult to achieve if the printed element 7 were added to the indelibly customized glass at a later time.

The provision of such printed element adds further graphic decoration elements or the like to the desired alphanumeric string 4 on the window, which further elements may be directly printed on the adhesive label 2 because they have no theft-deterring function. Thus each user is left free to decide whether:
- to maintain the whole adhesive label 2 on the window, with the above mentioned graphic or decoration elements 7 or
- to remove the adhesive label 2 after permanent customization of windows, with the alphanumeric string 4 being only maintained indelibly impressed on the car window.

It shall be understood that the adhesive label 2 may be maintained, for instance, on the side windows or the rear window only, and removed from the windscreen, to prevent it from obstructing the view while driving the vehicle.

Due to the structure of the above described adhesive label, the latter may be advantageously affixed to the interior side of the window C, so that the numbers and/or letters 5 can be normally readable in their current meaning by an observer that looks directly, i.e. without using a mirror, at the adhesive label 2 from outside the car, as mentioned above.

In another aspect, the present invention also relates to a kit for permanent customization of windows, which comprises a package containing:
- a support 1 for permanent customization of windows as described above and
- a glazing composition adapted to interact and modify the surface of a window by increasing its surface roughness, so that the portion with a modified surface is well visible on the surface of the window.

By way of example, such glazing composition comprises inorganic fluorine-containing compounds, preferably alkali metal and alkaline earth metal fluorides or ammonium fluorides.

Thus, the action of this glazing composition actually erodes the surface of the window, thereby generating an effect known in the art as acid-etching.

Preferably, this glazing composition consists of a fluid paste, which is easily spreadable, although it can remain in its application point, without dripping.

Advantageously, the above mentioned kit includes a tool for coating the second side of the adhesive label 2 with the glazing composition at the portions of the adhesive label 2 with the through holes 3.

Namely, this coating tool for the glazing composition may consists of a ball of cotton-wool possibly supported by a shaft, a paddle, a paintbrush or the like.

Furthermore, the kit may advantageously include a tool for removing and/or cleaning the glazing composition from the adhesive label and from the through apertures 3.

Namely, this tool for removing and/or cleaning the glazing composition from the adhesive label 2 may consists of a ball of cotton-wool possibly supported by a shaft, a cloth, a sponge and the like.

In the above mentioned kit, the glazing composition is provided as a fluid paste in a container.

Referring to the method for permanent customization of windows of the present invention, it shall be noted that this method advantageously includes the steps of:
a) providing an adhesive label 2 as described above;
b) affixing the adhesive label 2 to a first side of a window C, so that the first side with adhesive ability of the adhesive label 2 is adhered to the first side of the window C;
c) coating the second side of the label 2, at the portions with said through apertures 3, with a glazing composition adapted to interact and modify the surface of the side of the window C by increasing its surface roughness, so that the portion with a modified surface is well visible on the surface of the window;
d) allowing the glazing composition to have its effect on the surface of the side of the window C long enough to increase its surface roughness at the through apertures of the adhesive label so that the portion with a modified surface is well visible on the surface of the window C and
e) removing said glazing composition from the label and the through apertures 3.

Advantageously, said step b) of affixing the adhesive label to the first side of a window is carried out by affixing the adhesive label 2 to the inner side of a car window, with the inner side of the window being defined as the side facing towards the interior of the car.

As clearly shown in the above description, the support of the present invention for permanent customization of windows can solve the above mentioned problem and also obviate prior art drawbacks as set out in the introduction of this disclosure. Window customization is performed in a very simple manner and without requiring special-purpose tools, such as blasting tools. This will obviate any problem associated with the release of abrasive material that might occur during the blasting step.

As compared with prior art techniques, the support element, kit and method of the present invention affords permanent window customization in a simple and quick manner, and without requiring any specially skilled personnel.

Furthermore, the kit of the invention may be prepared beforehand, so that permanent customization of windows may be carried out by the car owner.

Another advantage of the permanent window customization support of the present invention is the possibility of adding, as an integration to customization, a logo, a text, telephone numbers and other elements, that may have a decorative of information complementing function. In short, the periphery of the adhesive support may be used as a carrier for additional information and/or commercial information and/or decorative elements.

Those skilled in the art will obviously appreciate that a number of changes and variants may be made to the support, the kit and method as described hereinbefore, without departure from the scope of the invention, as defined in the following claims.

## Claims

1. A support for permanent customization of windows (C) which comprises an adhesive label (2) having a first side with adhesive ability and a second side opposite thereto,
**characterized in that**:
- said adhesive label (2) has a plurality of through apertures (2), said through apertures (3) generally identifying a string (4) of letters and/or numbers and
- said through apertures (3) are in such an arrangement that at least two numbers and/or letters (5) of said string (4) are normally readable in their current meaning by an observer who looks at said adhesive label (2) from its side with adhesive ability.

2. A support as claimed in claim 1, wherein:
- said through apertures (3) are small through holes (3) and
- said numbers and/or letters (5) are formed by a plurality of said small through holes (3).

3. A support as claimed in claim 2, wherein said small through holes (3) are enclosed within the perimeter defined by the shape of a number and/or letter.

4. A support as claimed in claim 2 or 3, wherein each number and/or letter is formed by the assembly of a plurality of said small through holes (3).

5. A support as claimed in any claim from 1 to 4, comprising a support sheet (8) against which said first side with adhesive ability of said adhesive label (2) is adhered in a reversible manner, to allow said adhesive label (2) to be removed from said support sheet (8) and adhered to one side of a window (C).

6. A support as claimed in any claim from 1 to 5, wherein said label carries at least one printed element selected from the group comprising a graphic element, a decoration, a text, a logo and/or a drawing, for customization of said adhesive support.

7. **A window (C)** comprising an adhesive label (2) as claimed in any claim from 1 a 6, wherein said first side with adhesive ability of said label is affixed to one side of said window (C).

8. A **vehicle** (A) comprising a window (C) as claimed in claim 7, wherein said first side with adhesive ability is affixed to the interior of said window (C), having care to define as the interior of the window (C) the side facing towards the interior of the vehicle.

9. A **kit** for permanent customization of windows (C) which comprises:
- a support for permanent customization of windows (C) as claimed in any claim from 1 to 6,
- a package of a glazing composition adapted to interact and modify the surface of a window (C) by increasing its surface roughness, so that the portion with a modified surface is well visible on the surface of the window (C).

10. A kit as claimed in claim 10, comprising a tool for applying said glazing composition onto the second side of said label, at said through apertures (3).

11. A kit as claimed in claim 10, comprising a tool for removing and/or cleaning the glazing composition from said adhesive label (2) and from said through apertures (3).

12. A kit as claimed in any claim from 9 to 11, wherein said glazing composition is a glazing paste.

13. A **method** for permanent customization of windows (C) **characterized in that** it comprises the steps of:
**a)** providing an adhesive label (2) as claimed in any claim from 1 to 6;
**b)** affixing said adhesive label (2) to a first side of a window (C), so that said first side with adhesive ability of said label is adhered to said first side of said window (C);
**c)** coating the second side of said label, at said through apertures (3), with a glazing composition adapted to interact and modify the surface of said window (C) by increasing its surface roughness, so that the portion with a modified surface is well visible on said surface of the window (C);
**c)** allowing said glazing composition to have its effect on the surface of the side of said window (C) and increase its surface roughness at said through apertures (3) of said adhesive label (2) so that the portion with a modified surface is well visible on the surface of the window (C) and
**e)** removing said glazing composition from said label and said through apertures (3).

14. A method as claimed in claim 1, wherein said step b) of affixing said adhesive label (2) to a first side of a window (C) is carried out by affixing said adhesive label (2) to the interior of said window (C).

15. A method as claimed in claim 13 for permanent customization of windows (C) of a vehicle, wherein said step b) of affixing said label is carried out by affixing said adhesive label (2) to the interior of said window (C) having care to define as the interior of the window (C) the side facing towards the interior of the vehicle.
